# EUROPÄISCHE PATENTANMELDUNG

(11) **EP 1 467 269 A1**
(43) Veröffentlichungstag der Anmeldung: **13.10.2004**
(21) Anmeldenummer: 03007884.4
(22) Anmeldetag: 07.04.2003
(51) Int. Cl.: G05B 19/05

(54) **Identifikation lokaler Vorrichtungen in einem Datenverarbeitungssystem**

(71) Anmelder: Automation Daten- und Systemtechnik GmbH, 70771 Leinfelden-Echterdingen (DE)
(72) Erfinder: Speidel, Thomas, 71706 Markgröningen (DE)
(74) Vertreter: Wasmuth, Rolf, Dipl.-Ing.

(57) **Zusammenfassung**

Die Erfindung betrifft ein Steuergerät (F) in einer Fertigungsanlage, wobei das Steuergerät (F) einen Systemspeicher (C), einen Prozessor zur Ausführung einer Betriebssoftware sowie einer Netzwerkschnittstelle mit einer Netzwerkverbindung (E) zur Verbindung der Vorrichtung (F) mit einem Server (D) aufweist. Der Server (D) stellt Daten und/oder Software zum Betrieb der Vorrichtung (F) bereit. Um auch beim Austausch eines Steuergerätes eine einfache Anpassung an die lokalen Bedingungen des Einsatzortes zu gewährleisten, ist vorgesehen, die Vorrichtung (F) mit einem manuell austauschbaren Datenspeicher (A) zu versehen, in dem das spezifische Steuergerät (F) identifizierende lokale Kenndaten abgespeichert sind.

## Beschreibung

Die Erfindung betrifft eine softwarebasierte Vorrichtung zur Datenverarbeitung, insbesondere ein Steuergerät in einer Fertigungsanlage nach dem Oberbegriff des Anspruchs 1.

In größeren Fertigungsanlagen befindet sich eine Vielzahl unterschiedlicher.Steuerungsgeräte, die softwarebasiert arbeiten und mit einer Zentrale wie einem Server in Verbindung stehen kann. Jedes einzelne Steuergerät arbeitet mit den lokalen Bedingungen entsprechenden Softwaremodulen und Parametersätzen. Eine lokale Verwaltung der Softwaremodule, deren Updates und der lokalen Parametersätze ist zeit- und arbeitsintensiv. Fällt ein Steuergerät aus, muß es durch ein kompatibles Ersatzgerät ersetzt werden. Auf diesem Ersatzgerät müssen dann die am Einbauort benötigten Softwaremodule sowie die zugehörigen Parameter aufgespielt und eingerichtet werden. Die Softwaremodule können aus Betriebssystemmodulen oder Anwendungsmodulen bestehen.

Nach einer längeren Betriebszeit einer größeren Fertigungsanlage ergibt sich in der Praxis eine Vielzahl von Steuergeräten mit unterschiedlichen Versionen der Softwaremodule, da meist ein Updaten der lokalen Softwaremodule vor Ort erst dann vorgenommen wurde, wenn Störungen am Steuergerät auftraten.

Der Erfindung liegt die Aufgabe zugrunde, die in einem Netz verwendeten softwarebasierten Vorrichtungen zur Datenverarbeitung derart auszubilden, daß insbesondere bei Austausch einer Vorrichtung die benötigten Softwaremodule auf einfache Weise lokal zur Verfügung stehen und eine individuelle Anpassung an die lokalen Gegebenheiten möglich ist.

Die Aufgabe wird nach den Merkmalen des Anspruchs 1 gelöst.

Kerngedanke der Erfindung ist ein mobiler, manuell austauschbarer Datenspeicher, der mit der Vorrichtung verbunden ist und in dem lokale Kenndaten der Vorrichtung abgespeichert sind, die für eine eindeutige Identifizierung dieser spezifischen Vorrichtung notwendig sind. Hierzu zählen eine eindeutige Kennung des Standortes, die insbesondere innerhalb einer größeren Fertigungsanlage eindeutig sein muß. Daneben können auch weitere Informationen abgespeichert werden, die zum Aufbau einer Netzwerkverbindung mit einem zentralen Server notwendig sind.

Durch den mobilem, manuell austauschbaren Datenspeicher und den darauf abgelegten lokalen Kenndaten kann die lokale softwarebasierte Vorrichtung nach dem Einschalten eine Verbindung mit dem Server aufbauen und diesem die Kennung mitteilen. Aufgrund der Kennung kann der Server die für die lokale Vorrichtung notwendigen Softwaremodule sowohl eines Betriebssystems als auch Anwendungssoftware zuordnen und die Parameter zur Verfügung stellen, die zum Start der Softwaremodule in der lokalen Vorrichtung vor Ort benötigt werden. Die Softwaremodule können jederzeit über den Server abgefragt werden, um dann die neueste Version auf die lokale Vorrichtung zu laden. Dabei werden auch die vor Ort notwendigen lokalen Parameter vom Server zur Verfügung gestellt. Eine manuelle Anpassung z. B. eines Steuergerätes in einer größeren Fertigungsanlage vor Ort kann entfallen. Über den Server ist jedes Steuergerät aufgrund seiner lokalen Kennung eindeutig identifizierbar und kann über das Netzwerk gepflegt werden.

Fällt ein Steuergerät aus, kann dieses ohne weiteres durch ein kompatibles Steuergerät ersetzt werden. Aus dem defekten Gerät wird der mobile Datenspeicher entnommen und in das Ersatzgerät eingesteckt. Mit Einschalten des Ersatzgerätes wird die lokale Kennung dem Server mitgeteilt um dann die lokal notwendigen Softwaremodule zu laden, eine an die neuen lokalen Bedingungen angepaßte Parametrierung vorzunehmen und dann zu starten.

Mit der Erfindung ist auch ein beliebiger Austausch von Steuergeräten untereinander möglich, da nach Austausch des die Kenndaten enthaltenden mobilen Datenspeichers die lokale Zuordnung des Steuergerätes festgestellt ist.

Im Datenspeicher werden die Kenndaten permanent abgelegt. Der Datenspeicher kann z. B. durch Speichermedien wie z. B. eine Smart Card, eine SIMM Card, eine Flash Card, einen Memorystick, ein Microdrive, eine Diskette, eine CD-ROM oder dgl. ausgeführt sein.

Als identifizierende Kenndaten kann der lokale Standort der Vorrichtung abgespeichert sein und/oder die für eine Verbindungsaufnahme zum Server notwendigen Parameter. Die Softwaremodule werden vom Server bereitgestellt und nach dem Start des Steuergerätes vom Server geladen. Auf dem Server können hierzu für jede lokale Vorrichtung Softwaremodule sowie deren Parameter abgespeichert sein. Es kann auch vorteilhaft sein, diese Softwaremodule im lokalen Steuergerät vor Ort abzuspeichern und dann bei Bedarf vom Server aus upzudaten.

Gemäß dem erfindungsgemäßen Verfahren zum Betrieb der softwarebasierten Vorrichtung wird zunächst nach dem Einschalten der Vorrichtung die lokal gespeicherte Startsoftware die identifizierenden lokalen Kenndaten aus dem austauschbaren Datenspeicher auslesen und diese dem Server übermitteln. Der Kennung entsprechend stellt der Server Daten und/oder Softwaremodule für die identifizierte lokale Vorrichtung bereit, worauf die Daten und/oder die Softwaremodule in die lokale Vorrichtung geladen und gestartet werden.

Vorteilhaft werden vor dem lokalen Starten der Softwaremodule in der Vorrichtung die zum Betrieb notwendigen Parameter anhand der Kenndaten vom Server geladen und lokal entsprechend eingestellt.

Weitere Merkmale der Erfindung ergeben sich aus den weiteren Ansprüchen, der Beschreibung und der Zeichnung, in der nachfolgend ein im einzelnen beschriebenes Ausführungsbeispiel der Erfindung dargestellt ist.

Es zeigen:
- Fig. 1: in schematischer Darstellung eine softwarebasierte Vorrichtung in Verbindung mit einem Server,
- Fig. 2: eine schematische Darstellung entsprechend Fig. 1 in einem weiteren Anwendungsfall.

Die in den Figuren dargestellte softwarebasierte Vorrichtung für Datenverarbeitung ist als Steuergerät F ausgeführt, welches in einer nicht näher dargestellten Fertigungsanlage eingesetzt ist. Das Steuergerät ist mit Sensoren und mit Aktoren verbunden, wobei in Abhängigkeit von über die Sensoren mitgeteilten Signalen dem Fertigungsablauf entsprechende Aktoren betätigt werden. Hierzu ist neben dem Betriebssystem eine Anwendungssoftware notwendig, die in einer größeren Fertigungsanlage von Steuergerät zu Steuergerät unterschiedlich sein kann und abhängig vom Ort des Steuergerätes innerhalb der Fertigung mit unterschiedlichen lokalen Parametern betrieben wird. Für jedes lokale Steuergerät F müssen daher die lokal notwendigen Parameter eingestellt und die lokal notwendige Software des Betriebssystems und der Anwendung, nachstehend als Softwaremodule bezeichnet, im lokalen Steuergerät gespeichert und entsprechend den lokalen Anforderungen modifiziert werden.

Das Steuergerät F kann einen lokalen Systemspeicher C mit einer lokalen Startsoftware aufweisen sowie einen Arbeitsspeicher B, der zur Ausführung sowohl der Startsoftware als auch einer Anwendungssoftware, also der Softwaremodule notwendig ist. Gemäß der Erfindung ist zusätzlich ein mobiler, manuell austauschbarer Datenspeicher A vorgesehen, in dem die das spezifische Steuergerät F identifizierenden lokalen Kenndaten abspeicherbar sind. Der Datenspeicher A ist als Datenträger derart ausgeführt, daß in ihm die lokalen Kenndaten permanent gehalten werden, so daß auch nach Entnehmen des Datenspeichers A aus dem Steuergerät F die Datensicherheit gewährleistet ist. Als Datenspeicher A kann eine Speichermedium verwendet werden, das z. B. als Smart Card, SIMM Card, Flash Card, Memorystick, Microdrive, Diskette oder CD-ROM ausgebildet sein kann.

Der Datenspeicher A kann in einer Ausbildung im Steuergerät F leicht auswechselbar montiert sein.

Auf dem Speichermedium des Datenspeichers A werden die Kenndaten abgelegt, die für eine eindeutige Identifizierung des lokalen Steuergerätes F notwendig sind. Daneben können auf der Speicherkarte auch Daten enthalten sein, die eine Verbindung des Steuergerätes F mit einer Zentrale, im Ausführungsbeispiel einem Server D, sicherstellen. Derartige Daten können z. B. das genutzte Gateway, die IP-Adresse des Servers D oder dgl. sein.

Das Steuergerät F steht mit dem Server D über eine Netzwerkverbindung E in Verbindung.

Mit Einschalten des Steuergerätes F wird die lokal gespeicherte Startsoftware gestartet, die vorteilhaft im Systemspeicher C abgelegt ist. Die Startsoftware wird auf einem internen Prozessor ausgeführt und fragt die das Steuergerät identifizierenden lokalen Kenndaten aus dem mobilen Datenspeicher A ab (Pfeil 1). Die Daten des mobilen Datenspeichers A werden in die Startsoftware geladen (Pfeil 2), wodurch die Startsoftware in die Lage versetzt ist, die Netzwerkverbindung E mit dem Server D herzustellen. Anschließend werden gemäß Pfeil 3 von der Startsoftware beim Server D die geeigneten Softwaremodule angefordert, die entsprechend dem Pfeil 4 vom Server D der Startsoftware übermittelt wird. Die Startsoftware lädt die Softwaremodule in den Arbeitsspeicher B (Pfeil 5). Nachdem die Softwaremodule geladen sind, werden vom System gemäß Pfeil 6 die Parameter angefragt, die für das lokale Steuergerät F entsprechend seinen lokalen Kenndaten aus dem mobilen Datenspeicher A zum Betrieb der geladenen Softwaremodule notwendig sind. Die entsprechenden, zugeordneten Parameter werden vom Server D dem System mitgeteilt (Pfeil 7). Die Softwaremodule werden gestartet und das Steuergerät F ist betriebsbereit.

Vor dem Starten der Softwaremodule kann vom System an den Server D eine Anfrage (Pfeil 8) nach neueren Softwaremodulen oder neueren Parametersätzen ausgeführt werden, worauf der Server D die neueren Softwaremodule oder Parametersätze mitteilt (Pfeil 9), die vom System entsprechend im Arbeitsspeicher B abgelegt werden. Nach Laden der neuen Softwaremodule erfolgt noch die Anfrage (Pfeil 10) an den Server D, ob die neugeladenen Softwaremodule dem Ort des lokalen Steuergerätes F anzupassen sind. Ist dies der Fall, teilt der Server D die lokal durchzuführenden Modifikationen der Softwaremodule oder Parametersätze mit (Pfeil 11). Das Steuergerät F ist mit den neuesten Softwaremodulen und Parametersätzen betriebsbereit.

Fällt das Steuergerät F aus, kann es ohne weiteres durch ein hardwaremäßig kompatibles Steuergerät F ausgetauscht werden. Die Einbindung und Anpassung eines ausgetauschten Steuergerätes F erfolgt dabei vom Server D aus; in das neue Steuergerät F ist lediglich der mobile Datenspeicher A, z. B. als Speicherkarte ausgeführt, des ausgetauschten Steuergerätes F einzusetzen. Im neuen Steuergerät F wird die Startsoftware gestartet, die wiederum die Verbindung mit dem Server D über die Netzwerkverbindung E herstellt, die lokale Kennung des Steuergerätes F dem Server mitteilt und dann vom Server die zu Betrieb des neuen Steuergerätes F notwendigen Softwaremodule erhält.

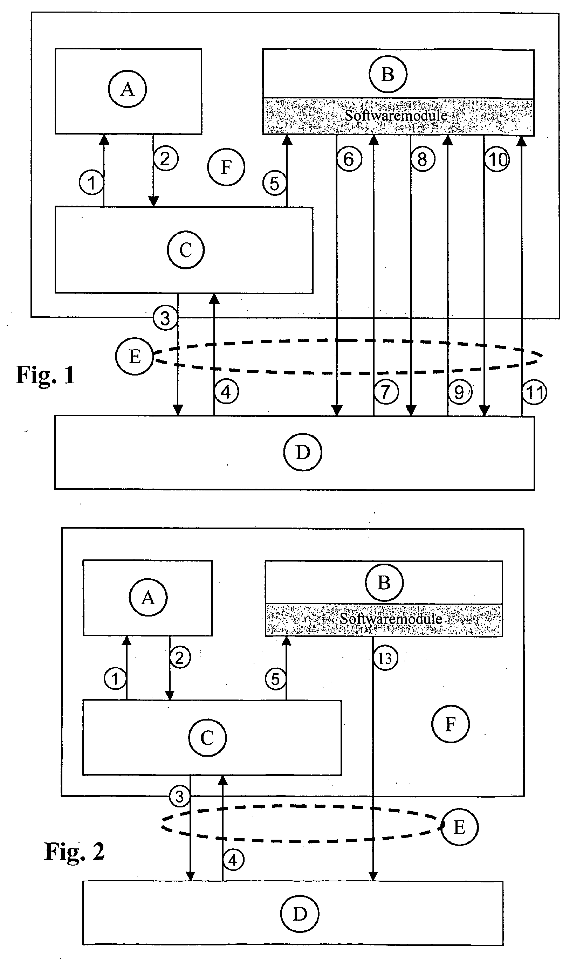

In Fig. 2 ist der Start eines derartigen erfindungsgemäßen Systems entsprechend den Pfeilen 1 bis 5, wie in Fig. 1 beschrieben, dargestellt. Zweckmäßig können die Softwaremodule manuell modifiziert und das Steuergerät F den lokalen Anforderungen entsprechend eingerichtet werden. Ist das Steuergerät F fertig konfiguriert, werden die neu konfigurierten Softwaremodule mit den gewählten Parametern zusammen mit der das Steuergerät F.identifizierenden lokalen Kennung des Datenspeichers A an den Server D gemeldet (Pfeil 6), der die Daten abspeichert. Damit sind die dem lokalen Steuergerät F zugeordneten Softwaremodule nach jedem Start des Steuergerätes F wieder verfügbar.

## Patentansprüche

1. Softwarebasierte Vorrichtung zur Datenverarbeitung, insbesondere ein Steuergerät (F) in einer Fertigungsanlage, mit einem Systemspeicher (C), einem Prozessor zur Ausführung einer Startsoftware sowie einer Netzwerkschnittstelle mit einer Netzwerkverbindung (E) zur Verbindung der Vorrichtung (F) mit einer Zentrale wie einem Server (D) oder dgl., wobei die Zentrale (D) Daten und/oder Software zum Betrieb der Vorrichtung (F) abrufbar bereitstellt,
**dadurch gekennzeichnet, daß** die lokale Vorrichtung (F) einen manuell austauschbaren Datenspeicher (A) aufweist, in dem die spezifischen, die lokale Vorrichtung (F) identifizierenden lokalen Kenndaten abgespeichert sind.

2. Vorrichtung nach Anspruch 1,
**dadurch gekennzeichnet, daß** der Datenspeicher (A) ein die Kenndaten permanent haltender Speicher ist.

3. Vorrichtung nach Anspruch 1 oder 2,
**dadurch gekennzeichnet, daß** der Datenspeicher (A) als Speichermedium, z. B. als Smart Card, als SIMM Card, als Flash Card, als Memorystick, als Microdrive, als Diskette, als CD-ROM oder dgl. ausgebildet ist.

4. Vorrichtung nach einem der Ansprüche 1 bis 3,
**dadurch gekennzeichnet, daß** der Arbeitsspeicher (B) ein Speichermedium, wie z. B. eine Festplatte, ein FLASH, ein RAM oder dgl. ist.

5. Vorrichtung nach einem der Ansprüche 1 bis 4,
**dadurch gekennzeichnet, daß** als identifizierende lokale Kenndaten der Standort der Vorrichtung gespeichert ist und/oder die für eine Verbindungsaufnahme zum Server (D) notwendigen Parameter gespeichert sind.

6. Vorrichtung nach einem der Ansprüche 1 bis 5,
**dadurch gekennzeichnet, daß** die Zentrale die notwendige Betriebssystemsoftware und/oder eine Anwendungssoftware in Form von Softwaremodulen sowie vorzugsweise die dafür notwendigen Parameter abrufbar bereitstellt.

7. Vorrichtung nach einem der Ansprüche 1 bis 6,
**dadurch gekennzeichnet, daß** in der Zentrale (D) ein oder mehrere Images der Betriebssystemsoftware und/oder der Anwendungssoftware sowie deren Parameter für eine lokale Vorrichtung (F) abgespeichert ist.

8. Verfahren zum Betrieb der Vorrichtung nach einem oder mehreren der Ansprüche 1 bis 7,
**dadurch gekennzeichnet, daß** nach dem Einschalten der Vorrichtung (F) die Startsoftware die identifizierenden lokalen Kenndaten aus dem Datenspeicher (A) ausliest, daß die ausgelesenen Kenndaten der Zentrale (D) übermittelt werden, daß die Zentrale Daten und/oder Softwaremodule für die nach den lokalen Kenndaten identifizierte lokale Vorrichtung (F) bereitstellt, daß die den lokalen Kenndaten zugeordneten Daten und/oder Softwaremodule in die Vorrichtung (F) geladen und dort gestartet werden.

9. Verfahren nach Anspruch 8,
**dadurch gekennzeichnet, daß** vor dem lokalen Starten der Betriebssystemsoftware oder der Anwendungssoftware deren Parameter so modifiziert oder eingestellt werden, wie dies von den von der Zentrale (D) für die durch die lokalen Kenndaten im Datenspeicher (A) identifizierte lokale Vorrichtung (F) gelieferten Daten vorgeben.
